# EUROPÄISCHE PATENTSCHRIFT

(11) **EP 1 450 150 B1**
(45) Veröffentlichungstag und Bekanntmachung des Hinweises auf die Patenterteilung: **30.06.2010**
(21) Anmeldenummer: 03027540.8
(22) Anmeldetag: 29.11.2003
(51) Int. Cl.: G01M 17/007, G01M 9/06

(54) **Verfahren und Vorrichtung zur Prüfung von Luftgeräuschen eines Kraftfahrzeugs**
Procedure and device for testing the air noise of a motor vehicle
Procédé et dispositif d'essai des bruits d'air d'un véhicule à moteur

(30) Priorität: 20.02.2003 DE 10307182
(43) Veröffentlichungstag der Anmeldung: 25.08.2004
(60) Teilanmeldung: 10000443.1
(73) Patentinhaber: Dr. Ing. h.c. F. Porsche AG, 70435 Stuttgart (DE)
(72) Erfinder: Ochwat, Michael, 71706 Markgröningen (DE); Horst, Herbert, 70806 Kornwestheim (DE); Möller, Mario, 70191 Stuttgart (DE); Mosel, Timo, 28876 Oyten (DE); Ehinger, Martin, 76187 Karlsruhe (DE)

(56) Entgegenhaltungen:
- EP-A- 0 016 656
- DE-A1- 3 939 099
- DE-C1- 3 715 016

## Beschreibung

Die Erfindung bezieht sich auf ein Verfahren zur Prüfung von Luftgeräuschen eines Kraftfahrzeugs nach dem Oberbegriff des Anspruch 1.

Bei einem in Betrieb befindlichen Personenkraftwagen entstehen Luftgeräusche, und zwar durch Umströmung einer Außenhaut eines Aufbaus auf zweierlei Art: Erstens durch eine turbulente Grenzschicht bei an der Außenhaut anliegender Strömung und zweitens durch stationäre und instationäre Ablösung und Wiederanlegen der Strömung von der bzw. an der Außenhaut. Infolge der turbulenten Grenzschicht wirkt auf die Oberfläche der Außenhaut ein Strömungswechseldruck, der sowohl Luftschall (Schallwellen breiten sich in dem gasförmigen Medium Luft aus) wie auch Körperschall (Schallwellen breiten sich in einem festen Körper aus) erzeugt.

Es ist ein Windkanal bekannt DE 41 39 359 A1 bekannt, der mit einer Freistrahlmessstrecke und einer zur Erzeugung einer in ihrer Richtung veränderlichen Strömung bei laufendem Windkanal schwenkbaren Windkanaldüse versehen ist. Dieser Windkanal kann zusätzlich mit akustisch wirksamen Einrichtungen ausgestattet werden, die in die Strömungsführung integriert sind. Dies deshalb, um den Schalldruckpegel so weit zu senken, dass auch die Wahrnehmung und messtechnische Erfassung der von der Anströmrichtung abhängigen Strömungsgeräusche möglich ist.

Die DE 39 39 099 A1 befasst sich mit einer Prüfvorrichtung für Front-Kühlerteile eines Kraftfahrzeugs, die mit unterschiedlichen Luftdurchsätzen durchströmbar sind. Dabei ist einem Kühler des Kraftfahrzeugs ein Trichter vorgelagert, dessen Querschnitt sich zum Kühler hin erweitert und mit einer Austrittsöffnung annähernd bündig mit einer Umrisslinie einer Kühlluft-Eintrittsöffnung verläuft. Außerdem umfasst die Prüfvorrichtung ein steuerbares Gebläse, das in der Nähe einer Eintrittsöffnung des Trichters vorgesehen ist.

Ferner beschreibt die DE 37 15 016 C1 einen Geräuschprüfstand für Kraftfahrzeuge mit einem Gebläse zur Erzeugung eines Luftstrahls, mit dem ein Kraftfahrzeug anblasbar ist.

Aufgabe der Erfindung ist es, ein Verfahren zur Prüfung von Luftgeräuschen eines Kraftfahrzeuges, insbesondere eines Personenkraftwagens zu entwickeln, durch die die qualitative Beurteilung des Personenkraftwagens hinsichtlich von Insassen wahrnehmbarer Luftgeräusche weiter optimiert wird. Dabei sollten sich das Verfahren und die Vorrichtung durch Einfachheit und leichte Umsetzbarkeit auszeichnen.

Erfindungsgemäß wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass mit dem Verfahren bei stehendem Personenkraftwagen durch Aufbringung gezielter Luftströmungen an definierte Bereiche der Außenhaut auf einfache Weise die Luftgeräusche subjektiv und/oder objektiv feststellbar sind. Dadurch entfallen aufwendige Prüffahrten mit dem Personenkraftwagen auf Teststrecken oder öffentlichen Strassen, und eventuelle Nachprüfungen. Wenn ferner an einem Personenkraftwagen Überarbeitungen erforderlich sind, sind diese in Verbindung mit dem Verfahren leichter durchzuführen. Die Luftströmungen werden durch ein Gebläse auf die Außenhaut aufgebracht, wobei definierte Messpunkte bspw. einer Tür des Aufbaus durch das Gebläse beaufschlagt werden. Hierfür eignet sich eine Strömungsvorrichtung, die das einen Ausströmquerschnitt umfassende Gebläse und eine zur Beaufschlagung der Messpunkte dienende Blasdüse aufweist. Dem Gebläse ist vorzugsweise ein Schalldämpfer nachgeschaltet und zwischen Blasdüse und Schalldämpfer ist ein Förderschlauch vorgesehen. Schließlich besteht die Möglichkeit Gebläse, Schalldämpfer, Förderschlauch und Blasdüse zu einer Baueinheit zusammenzufassen.

In der Zeichnung wird ein Ausführungsbeispiel der Erfindung gezeigt, das nachstehend näher beschrieben wird.

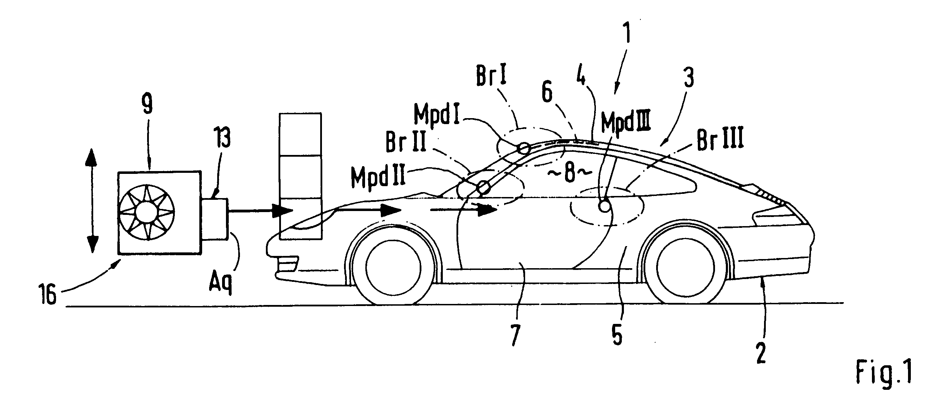

- Fig. 1: eine Seitenansicht eines stehenden Personenkraftwagens, an dem das erfindungsgemäße Verfahren angewandt wird,
- Fig. 2: eine Schrägansicht von hinten links auf den Personenkraftwagen mit einer Blasdüse,
- Fig. 3: eine weitere Schrägansicht ähnlich der Fig. 2,

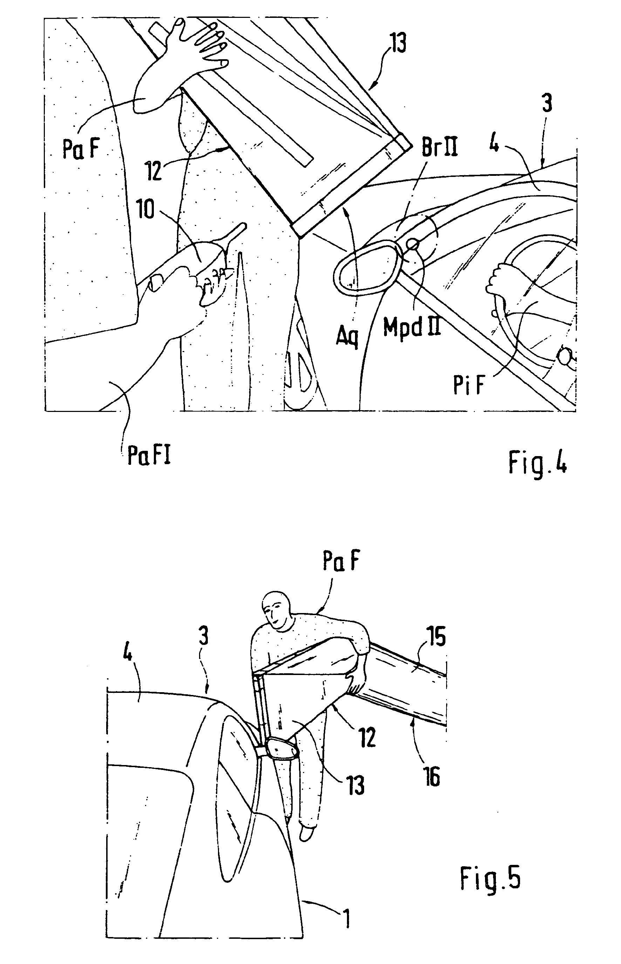

- Fig. 4: eine Schrägansicht von hinten links auf eine Windschutzsäule des Personenkraftwagens mit einer Blasdüse und Prüfpersonen zur objektiven und subjektiven Durchführung von Meßmethoden für Luftgeräusche,
- Fig. 5: eine Schrägansicht von hinten rechts auf den Personenkraftwagen mit der Blasdüse,
- Fig. 6: eine Schrägansicht von vorne auf den Personenkraftwagen mit der Blasdüse,
- Fig. 7: eine Schrägansicht von rechts auf den Bug und die Windschutzscheibe des Personenkraftwagens mit der Blasdüse,
- Fig. 8: eine schematische Darstellung der Vorrichtung zur Durchführung des erfindungsgemäßen Verfahrens,
- Fig. 9: eine Ansicht in Pfeilrichtung A der Fig. 8 mit verschiedenen Ausführungsformen von Austrittsquerschnitten der Blasdüse.

Ein Personenkraftwagen 1 weist einen Aufbau 2 mit einer Außenhaut 3 auf, die im Fahrbetrieb des besagten Personenkraftwagen von Luft angeströmt wird, wodurch Luftgeräusche entstehen, die über Dichtungen zwischen feststehenden Aufbaustrukturen wie bspw. ein Dach 4 und eine Seitenwand 5 und beweglichen Aufbauelementen wie bspw. ein Schiebedach 6 und eine Tür 7 als Körperschall und Luftschall in einen Fahrgastraum 8 gelangen. Luftgeräusche dieser Art werden bei entsprechender Ausprägung vor allem von im Fahrgastraum 8 sitzenden Insassen Is als störend und damit als qualitätsbeeinträchtigend wahrgenommen. Zur Überprüfung der Luftgeräusche wird folgendes Verfahren angewandt:

An dem unbewegten Personenkraftwagen 1 werden in Bereichen bspw. Brl, Brll und Brlll der Außenhaut 3, wo die Dichtungen zwischen den feststehenden Aufbaustrukturen - Dach 4, Seitenwand 5 - und beweglichen Aufbauelementen - Schiebedach 6, Tür 7 - verlaufen, gezielte Luftströmungen aufgebracht und die durch die Luftströmungen verursachten Luftgeräusche werden subjektiv von Prüfpersonen PiF und PaF innerhalb des Fahrgastraums 8 bzw. außerhalb des Personenkraftwagens 1 wahrgenommen und/oder objektiv gemessen.

Die Luftströmungen werden mittels eines außerhalb des Personenkraftwagens 1 vorgesehenen bzw. arbeitenden Gebläses 9 auf die Außenhaut 3 des Aufbaus 2 aufgebracht, und zwar an definierten Messpunkten Mpdl, Mpdll und Mplll der Tür 7 und des Schiebedachs 6. Die Messpunkte Mpdl, Mpdll und Mpdlll können innerhalb der Bereiche Brl, Brll und Brlll liegen. Zur objektiven Messung der Luftgeräusche wird bei diesem Verfahren der Schalldruckpegel herangezogen, der mittels eines akustischen Nahfeldmessgerät 10 ermittelt wird.

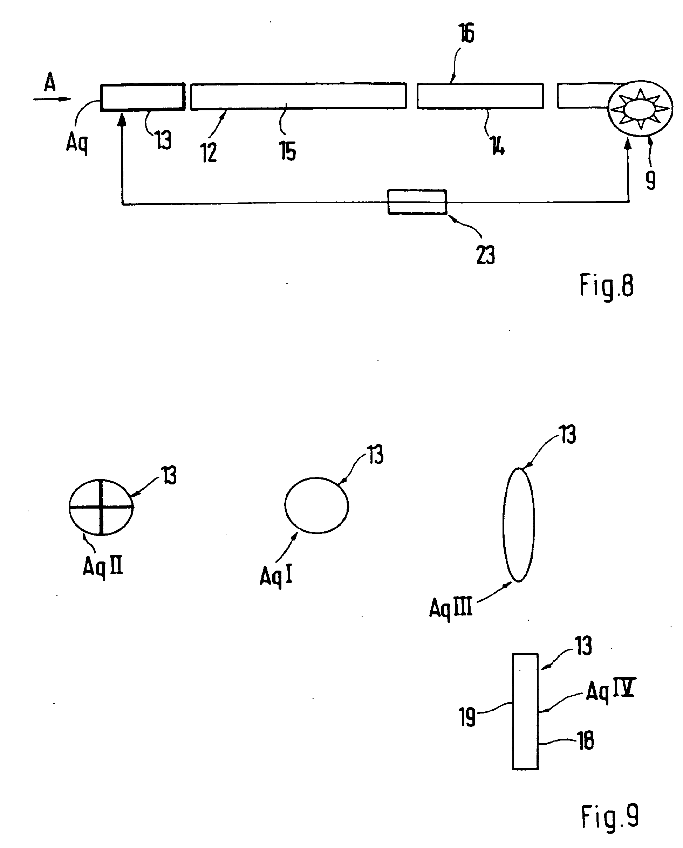

Für die Durchführung des vorstehend beschriebenen Verfahrens eignet sich eine Vorrichtung, die das einen Ausströmquerschnitt Aq aufweisende Gebläse 9 umfasst und als eine Strömungsvorrichtung 12 ausgebildet ist. Die Strömungsvorrichtung 12 ist mit einer Blasdüse 13 versehen, die zur Beaufschlagung der Bereiche BrI, BrII und Brlll bzw. der Messpunkte MpI, MPII und MpIII dient. Dabei ist dem Gebläse 9 ein Schalldämpfer 14 nachgeschaltete, und zwischen Blasdüse 13 und Schalldämpfer 14 ist ein bspw. flexibler Förderschlauch 15 angeordnet - Fig. 8 -. Das Gebläse 9, die Blasdüse 13, der Schalldämpfer 14 und der Förderschlauch 15 sind zu einer Baueinheit 16 zusammengefasst, die Bestandteil einer kompletten Prüfstation zur Feststellung von Luftgeräuschen sein kann.

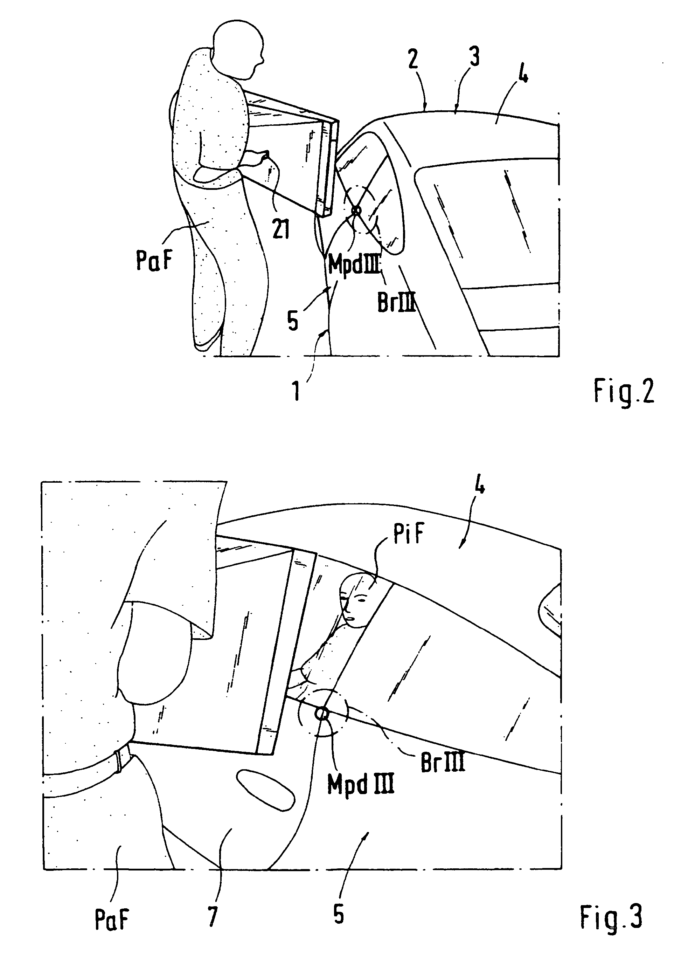

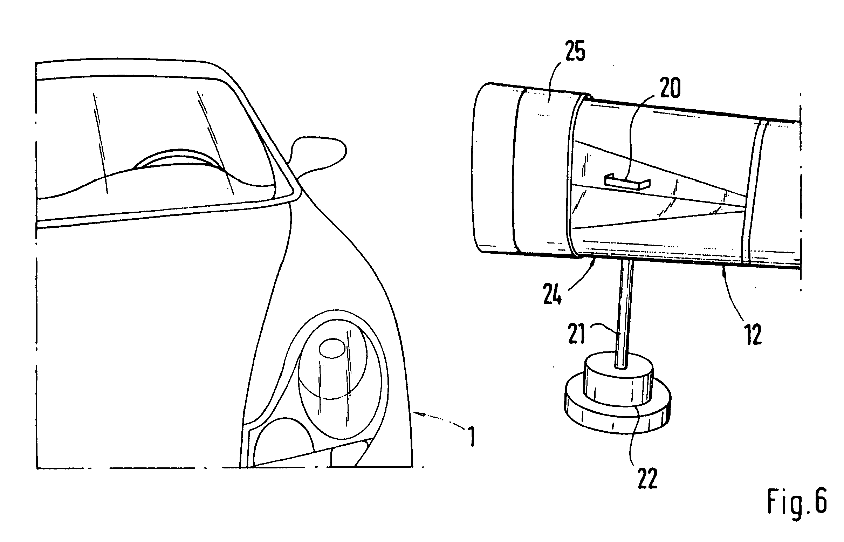

In Fig. 9 sind Austrittsquerschnitte AqI, AqII, AqII und AqIV der Blasdüse 13 dargestellt. Dabei weisen die Austrittsquerschnitt Aql und Aqll Kreisform auf, wobei Austrittsquerschnitt Aqll für eine definierte Verteilung der Luftströmung mit einem rasterförmigen Einsatz 17 versehen ist. Demgegenüber besitzen Austrittsquerschnitt Aqlll Ovalform und Austrittsquerschnitt AqIV Rechteckform mit parallelen langen Wänden 18 und 19, wobei eine optimierte Form des Austrittsquerschnitts Aq der Blasdüse 13 unter anderem empirisch festlegbar ist. Die Blasdüse 13 ist zur Hinführung auf die Messpunkte Mpl, Mpll und Mplll durch die Prüfperson PaF beweglich ausgeführt und mit einem Handgriff 20 versehen - Fig. 2 -, wobei die Prüfperson PiF im Fahrgastraum 8 die Wirkungen der Blasdüse 13 bzw. des Gebläses 9 bezüglich Luftgeräusche überprüft - Fig. 2 und 3 -. Eine weitere Prüfperson PaFI stellt gleichzeitig die Luftgeräusche an der Außenseite des Personenkraftwagens 1, und zwar fahrzeugnahe mit dem Nahfeldmessgerät 10 fest. Die Blasdüse 13 kann aber auch auf einer Stütze 21 angeordnet sein, die auf einem Sockel 22 ruht - Fig. 6 -; denkbar ist aber auch, dass die Blasdüse 13 an einem Seil oder einer Kette eines mobilen Flaschenzugs hängend angebracht ist, was jedoch nicht gezeigt wird. Die Luftströmung des Gebläses 9 bzw. ihre Geschwindigkeit ist vermittels einer Steuereinrichtung 23 regel- und an einem Anzeigegerät darstellbar - nicht näher ausgeführt -.

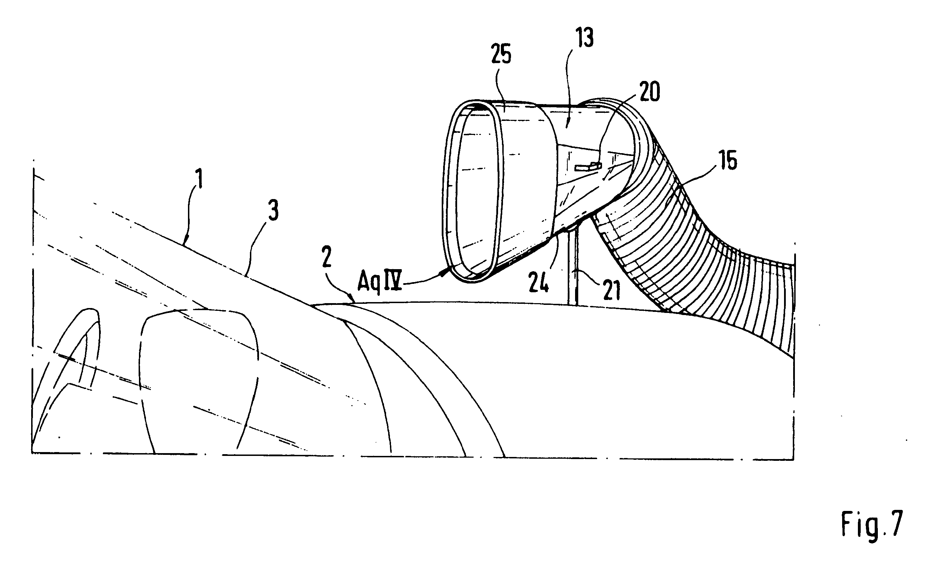

Schließlich ist die Blasdüse 13 an ihre Außenseite 24 mit einer Umhüllung 25 aus elastischem Werkstoff versehen, die zumindest mit geringem Abstand über den Austrittsquerschnitt Aq hinausragt - Fig. 7 - und bei einem unbeabsichtigten Auftreffen der Blasdüse 13 an der Außenhaut 3 bleibende Schäden an dem Personenkraftwagen 1 verhindert.

## Patentansprüche

1. Verfahren zur Prüfung von Luftgeräuschen eines Kraftfahrzeuges, insbesondere eines Personenkraftwagens, die durch Anströmen von Luft auf eine Außenhaut eines Aufbaus des Personenkraftwagens entstehen, wobei
1.1 mit einem Gebläse (13) an dem unbewegten Personenkraftwagen (1) in Bereichen der Außenhaut (3), wo Dichtungen zwischen feststehenden Aufbaustrukturen und beweglichen Aufbauelementen des Aufbaus (2) verlaufen, gezielte Luftströmungen aufgebracht werden, **gekennzeichnet durch** folgende Verfahrensschritte;
1.2 dass die **durch** die Luftströmungen auftretenden Luftgeräusche subjektiv **durch** eine Prüfperson (PiF, PaF) innerhalb oder außerhalb des Fahrgastraums wahrgenommen und/oder **durch** Messung ermittelt werden,
1.3 dass eine weitere Prüfperson (PaF) eine über einen Förderschlauch (15) an das Gebläse (9) angeschlossene beweglich ausgebildete Blasdüse (13) manuell mittels eines an der Blasdüse (13) befestigten Handgriffs (20) auf definierte Messpunkte in den Bereichen hinführt

2. Verfahren nach Anspruch 1, **dadurch gekennzeichnet, dass** zur objektiven Messung der Luftgeräusche der Schalldruckpegel herangezogen wird.

3. Verfahren nach Anspruch 2, **dadurch gekennzeichnet, dass** der Schalldruckpegel mittels eines akustischen Nahfeldmessgeräts (10) ermittelt wird.

## Claims

1. Method for testing air noises of a motor vehicle, in particular of a passenger car, which occur due to the flow of air onto an outer skin of a body of the passenger car,
1.1 directed air flows being applied by means of a blower (13) to the unmoved passenger car (1) in regions of the outer skin (3) where seals run between fixed body structures and movable body elements of the body (2),
**characterized by** the following method steps:
1.2 that the air noises occurring due to the air flows are detected subjectively by a test person (PiF, PaF) inside or outside the passenger space and/or are determined by measurement,
1.3 that a further test person (PaF) guides a movably designed blow nozzle (13), connected to the blower (9) via a conveying hose (15), onto defined measurement points in the regions manually by means of a handle (20) fastened to the flow nozzle (13).

2. Method according to Claim 1, **characterized in that** the sound-pressure level is used for the objective measurement of the air noises.

3. Method according to Claim 2, **characterized in that** the sound-pressure level is determined by means of an acoustic near-field measuring instrument (10).

## Revendications

1. Procédé d'essai des bruits d'air d'un véhicule à moteur, en particulier d'une voiture automobile, qui sont provoqués par l'écoulement de l'air sur une carrosserie extérieure d'une superstructure de la voiture automobile, dans lequel
1.1 on applique à l'aide d'une soufflerie (13) des flux d'air ciblés sur la voiture automobile à l'arrêt (1), dans des zones de la carrosserie extérieure (3) où se trouvent des joints d'étanchéité entre des structures supérieure fixes et des éléments mobiles de la superstructure (2), **caractérisé par** les opérations suivantes:
1.2 on observe subjectivement par une personne d'essai (PiF, PaF) les bruits d'air provoqués par les écoulements d'air, à l'intérieur ou à l'extérieur de l'habitacle et/ou on les détermine par une mesure, et
1.3 une autre personne d'essai (PaF) amène manuellement une buse de soufflage (13), mobile et raccordée à la soufflerie (9) par un tuyau de transport (15), au moyen d'une poignée (20) fixée à la buse de soufflage (13), sur des points de mesure définis dans les zones.

2. Procédé selon la revendication 1, **caractérisé en ce que** l'on utilise le niveau de pression sonore pour la mesure objective des bruits d'air.

3. Procédé selon la revendication 2, **caractérisé en ce que** l'on détermine le niveau de pression sonore au moyen d'un appareil de mesure acoustique en champ proche (10).
